# EUROPEAN PATENT SPECIFICATION

(11) **EP 0 879 635 B1**
(45) Date of publication and mention of the grant of the patent: **27.12.2006**
(21) Application number: 98201728.7
(22) Date of filing: 25.05.1998
(51) Int. Cl.: B01D 71/02, C12H 1/06

(54) **Device for beer filtration**
Vorrichtung zur Bierfiltration
Dispositif pour la filtration de bière

(30) Priority: 24.05.1997 NL 1006118
(43) Date of publication of application: 25.11.1998
(73) Proprietor: Koninklijke Grolsch N.V., 7500 AB Enschede (NL)
(72) Inventor: Van Rijn, Cornelis Johannes Maria, 7255 DB Hengelo (NL); Raspe, Onno Johannes Andreas, 7152 KH Eibergen (NL); Van Hoof, Stephan Cornelis Johannes Maria, 7207 GG Zutphen (NL)
(74) Representative: Jilderda, Anne Ayolt

(56) References cited:
- EP-A- 0 263 468
- WO-A-93/23154
- WO-A-95/13860
- WO-A-96/08036
- DE-U- 9 010 071
- US-A- 5 281 430

## Description

The present invention relates to a filter assembly for removing yeast cells by filtering beer comprising at least one filtration chamber having a first part communicating with a supply and a discharge for a main flow of beer and having a second part communicating with a discharge for a permeate recovered from said beer, wherein both said parts of said filtration chamber are mutually separated by a filter. The invention relates particularly herein to a device for filtering beer obtained by fermentation which must normally be filtered in large quantities prior to being bottled.

A number of methods for filtering liquids can be distinguished in accordance with the manner of interaction between the liquid for filtering and the filter. A simple form of filtration is dead-end filtration. The liquid for filtering is herein guided in its entirety through the filter, wherein particles therein which are too large remain behind in or on the filter. An increasing number of pores in the filter will therefore gradually become clogged and, if the filter is not cleaned regularly, the particle layer will eventually completely clog the filter as it becomes increasingly thicker. Such a filtration method is therefore only suitable for filtration of liquids with far fewer particles for filtering than the number of pores in the filter. Dead-end filtration does not therefore lend itself, certainly not on industrial scale, to filtering of fermentation products which are usually clouded by relatively large quantities of yeast cells.

In a traditional method of filtering beer yeast cells from lager beer use is made of a kieselguhr bed over which the liquid for filtering is guided. The yeast cells in the liquid adhere to kieselguhr whereby the liquid becomes increasingly purer. Gradually however the kieselguhr will become saturated so that the filtering action will deteriorate. After a period of time a fresh layer of kieselguhr is therefore arranged on top of the existing bed. When the layer of kieselguhr eventually becomes too thick, it is transported away and may or may not be regenerated for re-use. These aspects make filtration on a basis of kieselguhr particularly labour-intensive and costly.

A third filtration method is so-called cross-flow filtration, on which the device of the type stated in the preamble is based. In cross-flow filtration a main flow of the liquid for filtering is guided along the filter instead of through it. Due to a pressure difference applied over both sides of the filter a part of the liquid flowing past will nevertheless penetrate through the filter and can be drained as clean permeate. The remaining part of the liquid for filtering will again be mixed with the liquid still to be filtered and is guided repeatedly over the filter. A small part of the original amount of liquid for filtering is therefore eventually left over which has therein a high concentration of contaminants. An advantage of such a filtration method is that the filter does not become clogged as quickly as in dead-end filtration because the liquid flowing past will continuously exercise a cleaning action on the filter surface. Should the filter nevertheless become too clogged after a period of time, a short back-flush pulse through the filter is then often sufficient to unblock the filter. A short liquid pulse is herein given in opposite direction through the filter on the permeate side of the filter so that the particles blocking the filter are detached and are then carried along by the main flow. Because pure permeate is used for the liquid pulse, which must therefore be recovered once again, the use of this so-called back-flushing must be limited to a minimum.

An example of cross-flow beer filtration is described on page 388-389 of the German-language handbook "Technologie, Brauer & Mältzer" by Kunze as well as by German utility model DE 90.10.071. According to these known filter assemblies, a freely suspended membrane of a suitable polymer is used as filter layer. A drawback to such a filter layer however is the relatively great surface roughness both on the filter surface and in the pores. Yeast cells hereby nestle relatively easily in the filter and a back-flush must inevitably be carried out with some regularity. In order to avoid this, a filtration in two steps is proposed in the known device, wherein after a first coarse pre-filtration by means of cross-flow membrane filtration the last yeast cells are removed from the liquid. It will however be apparent that this requires additional investment, and often extra space as well. A further drawback of polymer membranes for beer filtration is that the polymers which are suitable for such membranes often cannot withstand the cleaning agents commonly used in a brewery for thorough cleaning of the installations after each filtration cycle.

The present invention has for its object inter alia to provide a device of the type stated in the preamble with which fermented liquids can be filtered with a large flux and wherein the above stated drawbacks are obviated.

In order to achieve the stated objective, a filter assembly of the type stated in the preamble according to the invention is characterized in that said filter comprises a filter layer with pores of a precisely determined size which are formed with the aid of photo-lithographic techniques, in that the filter, after the pores having been formed therein, is glued or otherwise arranged on a flat carrier with a thickness significantly greater than the thickness of the filter, in that at least one opening is arranged in the carrier at the position of the filter in order to reveal the filter layer and in that said carrier has a thermal expansion coefficient which is practically equal to that of said filter. The invention is herein based on the insight that liquid fermentation products, in particular beers and wines, are characterized by the presence therein of yeast cells of practically equal size.

A plate and frame type cross-flow arrangement for beer filtration, using e.g. ceramic membranes, is known from DE-9010071-U.

A filter of the kind as used in the filter assembly according to the invention is known per se from International patent application WO 95/13860. This known filter comprises a substrate of semiconductor material, specifically silicon, on which a patterned silicon nitride layer has been formed with the aid of very precise photo-lithographic semiconductor techniques. Said silicon nitride layer forms a filter layer with very precisely determined pores.

A filter assembly according to the invention has a very close pore pitch distribution and can thus be adapted optimally to the yeast cell size so as not to allow the yeast cells any or hardly any opportunity to penetrate into and clog the pores of the filter. Back-flushing of the filter can thereby be limited to a minimum, all the more so because the pores arranged according to the invention with great precision in the filter layer have an extremely slight surface roughness, which makes adhesion of yeast cells difficult. Many materials can be applied for the filter layer according to the invention, and in particular inorganic materials such as metals, silicon and silicon nitride, which are highly resistant to cleaning agents commonly used in breweries. Finally, with a filter layer according to the invention an exceptionally large flux is found to be obtainable which in the case of for instance beer filtration is about forty times higher than in the traditional filtering method on a basis of kieselguhr. A device according to the invention can hereby be given an exceptionally compact construction and requires hardly any space.

A particular embodiment of the device according to the invention lends itself particularly to filtration of lager beers and for this purpose has the feature that the pores in the filter layer are of at least practically equal size of a maximum of about 2 micron. The yeast cells in lager beers have a relatively uniform size of about 3 micron, so that the above stated pore size forms an adequate barrier thereto.

The device according to the invention is in principle suitable for liquids obtained after a beer or wine fermentation process. The permeate must not only be free of yeast cells but also of bacteria. For this purpose a sterilization step is usually carried out after the filtration. So as to avoid such a sterilization step a particular embodiment of the device according to the invention has the feature that the pores in the filter layer have a size smaller than 0.5 micron, in particular between 0.25 micron and 0.5 micron. Owing to the extremely close pore pitch distribution it is possible with such a filter to remove in one operation from the starting liquid both the yeast cells remaining therein and bacteria, which are normally larger than 0.5 micron.

A further embodiment of the device has the feature according to the invention that the first part of the filtration chamber has a height directed transversely of the filter surface of between 200 micron and 2000 micron. The pressure over the filter layer is preferably lower than or equal to about 5000 Pa. By choosing the height of the first part of the filtration chamber within said range, it is possible, when a main flow speed is sufficiently great for an adequate self-cleaning of the filter, for such an optimal pressure to be reached without the danger of unintended back-flow of permeate. A lower height results in such a large pressure fall that there is great danger of the pressure of the main flow being lower on the downstream side than that on the permeate side, so that there is the chance of permeate flowing back, which reduces efficiency. A greater height results in a less than optimal flow of the liquid over the filter surface, whereby no more, or hardly any more, permeate is recovered and the efficiency of the filter therefore decreases.

In a preferred embodiment the device according to the invention has the feature that the filter layer has a thickness which is smaller than the average pore diameter. In this case the pores are actually openings instead of thin channels, which limits the risk of irreversible blockage with a yeast cell. Furthermore, the transversal resistance of the filter can thus remain exceptionally low, this being expressed in the extremely high flux which can be obtained with a filter according to the invention.

A further embodiment of the device has the feature according to the invention that the filter layer has at least on its side directed toward the first part of the chamber an at least practically flat surface with height variations smaller than about 100 nanometer. Such a slight surface roughness is possible in the device according to the invention because the starting point for the manufacture of the filter can be an at least practically completely flat filter layer which, if desired, can be pre-flattened prior to arranging the pores therein. The adhesion of solid constituents of the liquid for filtering can thus be limited to an absolute minimum, whereby not only can the filter be operated for long periods without interim cleaning but an ideal flow is moreover created along the filter surface from which clean permeate can be extracted with a relatively large flux.

In order to enable interim removal from the filter layer of yeast cells nevertheless caught therein, a further embodiment of the device according to the invention has the feature that the second part of the filtration chamber has an inlet for supplying a clean liquid which may or may not be separated from the permeate discharge. For fully continuous operation this embodiment according to the invention preferably has the additional feature that said inlet is arranged separately of the permeate discharge. Said inlet provides the option of performing a back-flush as described above. Although within the scope of the invention the permeate discharge in the second part of the filtration chamber can be used for a back-flush pulse, this preferred embodiment provides the option of performing a back-flush at any desired moment virtually without interruption of the filtration process. Permeate which has already been collected can be used for the back-flush, as well as another suitable clean, i.e. yeast-free, liquid such as for instance pure water or already recovered permeate.

Especially favorable results are achieved in practice with a particular embodiment of the device according to the invention with the feature that the filter layer comprises a silicon nitride layer in which the pores are arranged and which is located on a substrate of silicon in which openings are arranged locally from a side remote from the silicon nitride layer in order to reveal the silicon nitride layer from this side. Not only are silicon and silicon nitride found to be particularly suitable for the filter in the device according to the invention in respect of filtration properties, but said materials also offer particular advantages from the viewpoint of chemical resistance and photo-lithographic processing. For an increased mechanical strength a further exceptional embodiment herein has the feature that the pores are arranged in the filter layer distributed over a number of separate segments, wherein adjacent segments are mutually separated by closed zones, and more particularly that the filter is arranged on a flat carrier with a thickness significantly greater than the thickness of the filter and that at least one opening is provided in the carrier at the position of the filter in order to reveal an underside of the filter.

For a sufficiently large capacity, particularly in large-scale industrial applications such as the preparation of beer and wine, a particular embodiment of the device according to the invention is characterized in that said assembly comprises a stack of at least two filters which are mutually separated by gaskets, in that the filters are deployed pair-wise with their filter layers facing each other and in that said gaskets comprise openings communicating with said supply and discharge for said main flow of fermented liquid or said discharge for said permeate. In this device an optionally large number of filtration chambers are mutually connected in parallel in exceptionally compact manner in the main flow of the liquid for filtering, wherein the filtration capacity increases proportionally.

The invention will now be further elucidated with reference to an embodiment and a drawing. In the drawing:
- fig. 1A-1D: show a cross-section of an embodiment of a filter for the device according to the invention in successive stages of manufacture;
- fig. 2A-2C: show top views of the filter of figure 1 respectively an alternative embodiment thereof;
- fig. 3: shows in exploded view an embodiment of a device according to the invention intended for beer filtration;
- fig. 4: shows a longitudinal section of the device of figure 3 along the line X-X; and
- fig. 5: shows a longitudinal section of the device of figure 3 along the line Y-Y.

The drawings are otherwise purely schematic and not drawn to scale. Some dimensions in particular are highly exaggerated for the sake of clarity. Corresponding parts are designated as far as possible in the figures with the same reference numeral.

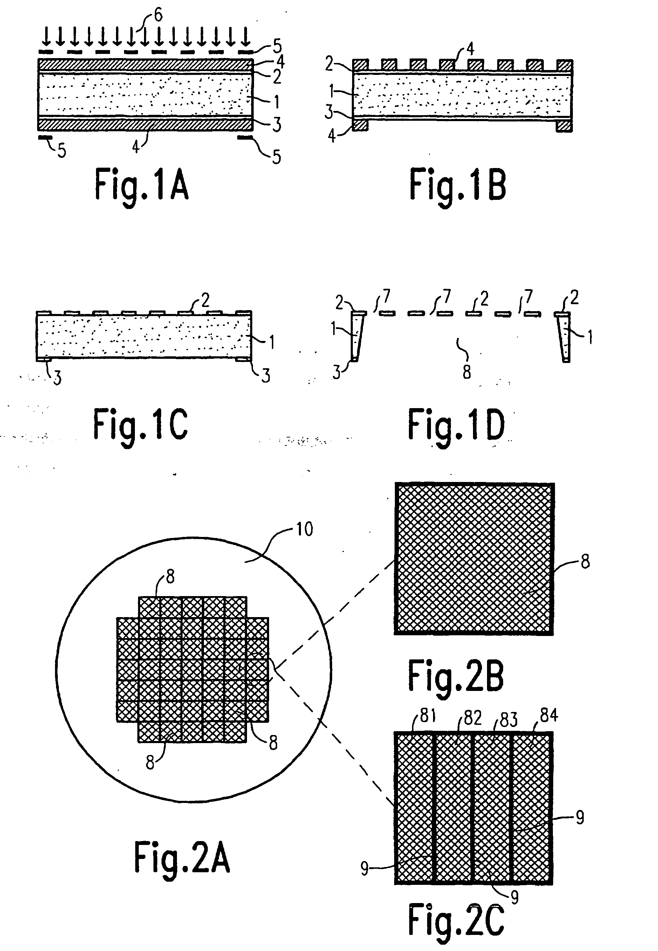

An embodiment of a microfilter for use in the device according to the invention is shown in figures 1A-1D in successive stages of manufacture. In this case the starting point for manufacture, see figure 1A, is a substrate 1 of silicon with a thickness of several hundred micron, in this case about 400 micron, which is coated on both sides with a layer of silicon nitride 2,3 with a thickness of about 1 micron. The layers of silicon nitride 2,3 can be applied with an extremely high degree of flatness making use of existing deposition techniques such as CVD. The surface roughness of layer 2 which serves as starting point for the filter layer to be formed can thus be realized with an exceptionally slight surface roughness with height variations which can easily remain smaller than 100 nm. This is found to be of particular advantage in the device according to the invention which is operated on the basis of cross-flow filtration.

The whole is coated with a layer of photoresist lacquer 4 which is exposed to light or other radiation of a suitable wavelength while being masked by a photo-lithographic mask. Exposure takes place in this case with UV light. By subsequently washing the whole with a suitable developer, the thus exposed parts of photoresist lacquer 4 are dissolved while the masked parts remain, which results in the structure shown in figure 1B.

The whole is then subjected to a suitable etching agent for silicon nitride, whereby at the position of the uncoated parts of silicon nitride layer 2 pores 7 are etched therein with a diameter of about 2 micron. On the underside of the substrate the silicon nitride layer arranged thereon is herein also etched integrally away over a large part of its surface. The structure of figure 1C is thus obtained. Finally, making use of silicon nitride layers 2,3 as etching mask, the substrate 1 is etched away over its full thickness, mainly from the underside, in order to reveal the filter layer 2 meanwhile formed on its surface, see figure 1D.

The thus obtained structure is characterized by a large number of pores 7 of virtually identical dimension and design due to the great and ever-increasing precision of existing lithographic processes. In the above described manner a filter can be produced with an extremely steep pore pitch distribution which is completely reduced to nil within a distribution of less than a few percent.

Figure 1D otherwise shows only a single island, although in reality a large number of such islands will be arranged in a silicon wafer, as shown in the top view of figure 2A. The unit shown there forms the filter which will be applied in the following example of a device according to the invention with which beers, wines and other fermentation products can be efficiently filtered with an extremely high flux and operating time for removal of yeast residues and other possible solid contaminants. Figures 2B and 2C herein show two alternative embodiments of the islands in the filter, wherein in the latter case the pores in the silicon layer are distributed over a number of individual, in this case rectangular, segments 81-84 which are mutually separated by closed zones 9 in silicon nitride layer 2. Such a subdivision of islands 8 results in practice in an increased mechanical strength whereby a longer lifespan of the filter is also guaranteed at higher liquid pressures.

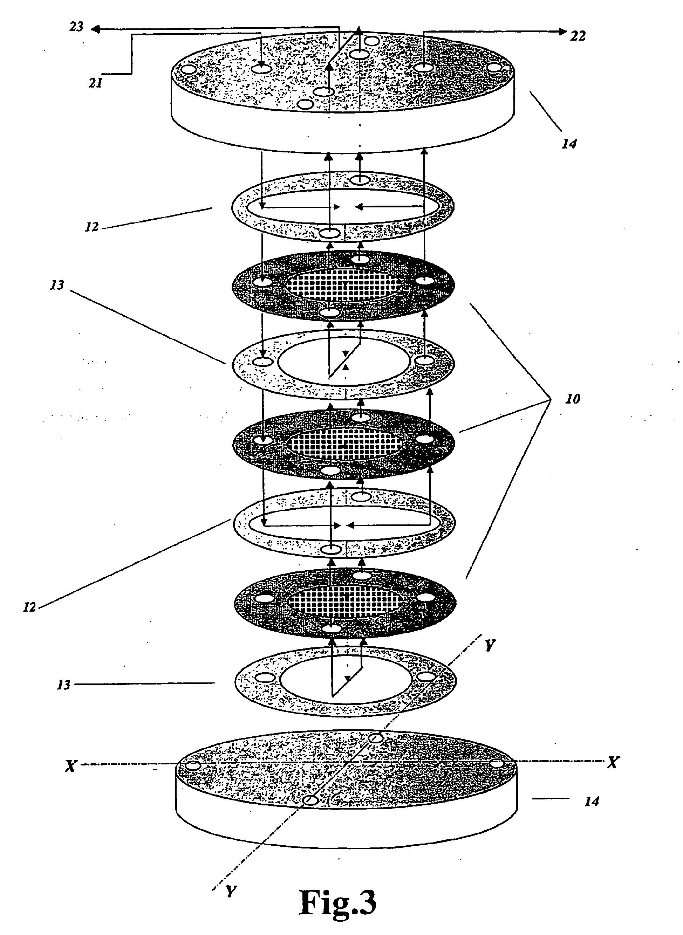

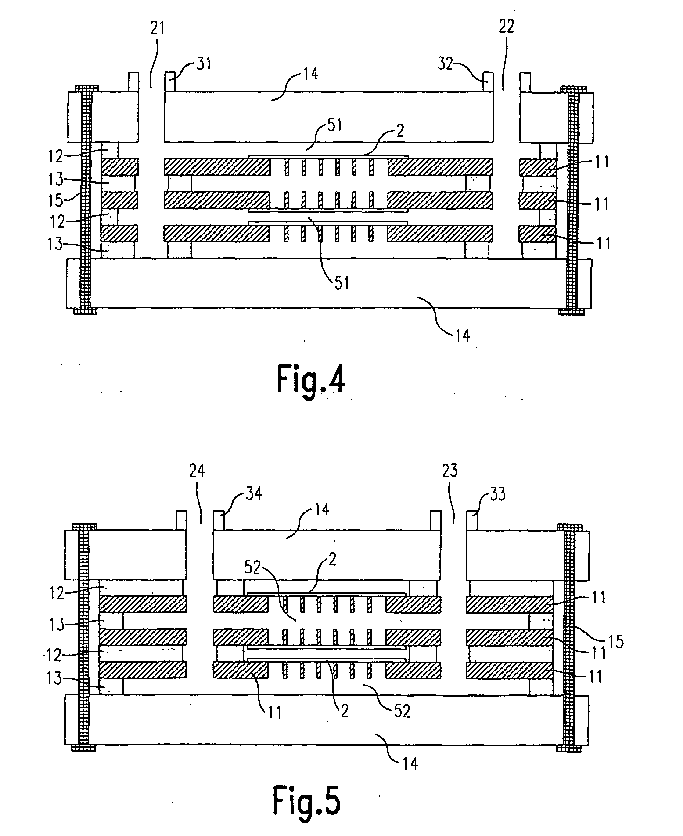

An embodiment of a device according to the invention in which the above described filter is applied is shown in figure 3 in exploded view. The device comprises in this case a stack of a number of filters for the purpose of increasing the filtering capacity and is intended for the filtration of lager beer or wine on large scale. Filters 10 are herein glued or otherwise arranged on a carrier with a thickness of several centimetres for the purpose of increasing the mechanical stability, this being shown more clearly in the cross-sections of figures 4 and 5. The carrier preferably has a thermal expansion coefficient which is practically equal to that of the applied filter, which in this example suggests a ceramic material. Stainless steel is however also a suitable material from the viewpoint of manufacturing technique.

The individual filters are mutually separated by liquid-tight gaskets to hermetically seal off from each other the impure liquid side and the permeate side of each filter. Two types of gasket respectively designated 12 and 13 are herein used in this example which differ in shape. Due to these gaskets a feed 21 and a discharge 22 of a main flow of the liquid for filtering are separated in liquid-tight manner from an outlet 23 for a permeate recovered from the main flow. Although in the device of this example there are only three stacked filters 10, the stack can be extended relatively without problem to a larger number in order to achieve a larger filter capacity in a nevertheless compact device.

The stack of filters and gaskets lies clamped between two end pieces 14 on which connectors 30,31,32 are provided for respectively the feed and discharge of the main flow for filtering and for the discharge of the permeate recovered therefrom. The end pieces are manufactured for instance from steel or perspex and comprise bores for receiving continuous bolts 15, see figures 4 and 5, with which the whole is fixed.

The connectors are shown schematically in figures 4 and 5 and comprise universal fluid couplings of a suitable dimension. In addition, a connector 34 is provided by means of which a so-called back-flush can be given during operation independently of the permeate outlet 23,33 in order to wash clean an unexpectedly blocked filter 10 with recovered permeate or other clean liquid.

The device comprises a number of filter chambers which lie parallel therein in the main flow of the liquid for filtering. The feed and discharge 21,22 of the main flow herein connect onto a first part 50 of the filter chambers which adjoins the filter layer 2 of the filters. On the side remote from filter layer 2 is situated a second part 52 of the filter chambers from which the recovered permeate is drained and from which a back-flush pulse can be guided through the filter via the inlet 24 provided for this purpose. In the present case the filters lie in pairs with their filter layers facing each other to thus integrate into each other adjacent parts of filter chambers. A height of between 200 micron and 2000 micron in the first parts of the filter chambers is found in practice to produce an ideal combination of a moderate pressure over a filter and not too great a pressure fall between the feed and discharge at a flow speed with an adequate cleaning action on the filter surface. In this case this represents the perpendicular distance between the filter layers facing each other in pairs or, in the case of a final, odd filter, the perpendicular distance between its filter layer and the adjacent end piece.

Due to the use therein of photo-lithographically manufactured filters, also referred to as micro-screens, the device shown here is found to be capable of an extremely high filter flux of about 15000 litres per hour per square metre of filter surface at one bar of pressure difference over the filter. With the same filter surface more than 100 times more filtering capacity can hereby be achieved than in conventional filter beds on a basis of kieselguhr, whereby even in an industrial environment it is possible to suffice with a relatively compact installation. The device according to the invention herein realizes a yeast cell reduction in lager beer from 800,000 cells per litre in the unfiltered beer to no more than an average of about 5 cells per litre of permeate.

Although the invention has been further elucidated above with reference to only a single embodiment, it will be apparent that many further variations and embodiments are possible within the scope of the invention. Said materials and dimensions can thus be substituted by suitable alternative materials. In particular the dimension of the pores in the filter can be further modified to specific fields of application. Thus, due to the great precision with which the pores are formed and the extremely steep pore pitch distribution resulting therefrom, the device according to the invention can also be employed as sterilization filter in beer or wine filtration, wherein a pore diameter of a maximum of 0.5 micron, and in particular between 0.25 micron and 0.5 micron, is used. In this case yeast cells and bacteria as well as other pathogens can be removed from a liquid in one step, so that a separate sterilization step is unnecessary. This is advantageous in the above described application in the field of preparing beers, wines and other drinks obtained by fermentation in presence of yeast cells.

In addition, the filter according to the invention can also be manufactured otherwise than by means of exposure, development and etching of a pore pattern defined therein using a mask. Use can thus be made of interference patterns instead of a mask in the exposure of a photoresist lacquer layer to define therein ultrafine pores with a diameter smaller than 0.5 micron while making use of a per se coarser lithography. The starting point may also be a completely different process wherein a galvanic mould is manufactured in photo-lithographic manner on which a metal layer provided with the desired pores is deposited by electro-deposition. What is important in the filter according to the invention is that the pores in the filter layer are formed therein in a defined and therefore controllable manner so that a high degree of uniformity is obtained with an associated extremely steep pore pitch distribution.

## Claims

1. Filter assembly for filtering beer comprising at least one filtration chamber having a first part (51) communicating with a supply (21) and a discharge (22) for a main flow of fermented liquid and having a second part (52) communicating with a discharge (23) for a permeate recovered from said fermented liquid, wherein both said parts of said filtration chamber are mutually separated by a filter (1,2) **characterized in that** said filter comprises a filter layer (2) with pores (7) of a precisely determined size which are formed with the aid of photo-lithographic techniques, **in that** the filter, after the pores having been formed therein, is glued or otherwise arranged on a flat carrier (11) with a thickness significantly greater than the thickness of the filter, **in that** at least one opening is arranged in the carrier at the position of the filter in order to reveal the filter layer and **in that** said carrier has a thermal expansion coefficient which is practically equal to that of said filter.

2. Filter assembly according to claim 1 **characterized in that** said carrier comprises a ceramic material.

3. Filter assembly according to claim 1 or 2 **characterized in that** said assembly comprises a stack of at least two filters which are mutually separated by gaskets (12,13), **in that** the filters are deployed pair-wise with their filter layers facing each other and **in that** said gaskets comprise openings communicating with said supply and discharge for said main flow of fermented liquid or said discharge for said permeate.

4. Filter assembly as claimed in claim 3, **characterized in that** the stack lies clamped between two end pieces (14) on which connectors (31,32,33) are provided for the supply and discharge of the main flow of fermented liquid and for the discharge of recovered permeate.

5. Filter assembly as claimed in claim 1 or 2, **characterized in that** the pores in the filter layer are of at least practically equal size of a maximum of about 2 micron.

6. Filter assembly as claimed in claim 5, **characterized in that** the pores in the filter layer have a size smaller than 0.5 micron, in particular between 0.25 micron and 0.5 micron.

7. Filter assembly as claimed in one or more of the preceding claims, **characterized in that** the first part of the filtration chamber has a height directed transversely of the filter surface of between 200 micron and 2000 micron.

8. Filter assembly as claimed in one or more of the preceding claims, **characterized in that** the filter layer has a thickness which is smaller than the average pore diameter.

9. Filter assembly as claimed in one or more of the preceding claims, **characterized in that** the filter layer has at least on its side directed toward the first part of the chamber an at least practically flat surface with height variations smaller than about 100 nanometre.

10. Filter assembly as claimed in one or more of the preceding claims, **characterized in that** the second part of the filtration chamber has an inlet (24) for supplying a clean liquid which may or may not be separated from the permeate discharge.

11. Filter assembly as claimed in claim 10, **characterized in that** said inlet is arranged separately of the permeate discharge.

12. Filter assembly as claimed in one or more of the preceding claims, **characterized in that** the filter layer comprises a silicon nitride layer (2) in which the pores are arranged and which is located on a substrate (1) of silicon in which openings are provided locally from a side remote from the silicon nitride layer in order to reveal the silicon nitride layer from this side.

13. Filter assembly as claimed in claim 12, **characterized in that** the pores in the silicon nitride layer have substantially the same diameter of a maximum of about 2 micron, that the silicon nitride layer has a thickness which is at most equal to the pore diameter of the pores and that the substrate has a thickness in the order of several hundred micron.

14. Filter assembly as claimed in one or more of the preceding claims, **characterized in that** the pores are arranged in the filter layer distributed over a number of separate segments (81-84), wherein adjacent segments are mutually separated by closed zones (9).

15. Filter assembly as claimed in claim 14, **characterized in that** the pores are divided into substantially rectangular segments which are mutually separated by closed bands.

## Patentansprüche

1. Filteranordnung zum Filtern von Bier mit wenigstens einer Filtrationskammer, die ein erstes Teil (51) aufweist, das mit einem Vorrat (21) in Verbindung steht, und mit einem Ausgang (22) für einen Hauptfluss von fermentierter Flüssigkeit, und mit einem zweiten Teil (52), das mit einem Ausgang (23) für ein Permeat in Verbindung steht, das von der fermentierten Flüssigkeit gewonnen wird, wobei die beiden genannten Teile der Filtrationskammer voneinander durch ein Filter (1, 2) beabstandet sind, **dadurch gekennzeichnet, dass** das Filter eine Filterschicht (2) mit Poren (7) einer präzise vorgestimmten Größe aufweist, die mit Hilfe von photolithographischen Verfahren gebildet sind, dass das Filter, nachdem die Poren darin gebildet sind, auf einem flachen Träger (11) aufgeklebt oder in anderer Weise mit einer Dicke angeordnet ist, die deutlich größer als die Dicke des Filters ist, das wenigstens eine Öffnung an dem Träger an der Position des Filters angeordnet ist, um die Filterschicht freizulegen, und dass der Träger einen thermischen Ausdehnungskoeffizienten hat, der im Wesentlichen gleich demjenigen des Filters ist.

2. Filteranordnung nach Anspruch 1, **dadurch gekennzeichnet, dass** der Träger ein keramisches Material umfasst.

3. Filteranordnung nach Anspruch 1 oder 2, **dadurch gekennzeichnet, dass** die Anordnung einen Stapel von wenigstens zwei Filtern aufweist, die voneinander durch Dichtungen (12, 13) beabstandet ist, dass die Filter paarweise angeordnet sind, miteinander zugewandten Filterschichten, und dass die Dichtungen Öffnungen aufweisen, die mit dem Vorrat und dem Ausgang für den Hauptfluss von fermentierter Flüssigkeit oder dem Ausgang für das Permeat in Verbindung stehen.

4. Filteranordnung nach Anspruch 3, **dadurch gekennzeichnet, dass** der Stapel zwischen zwei Endstücken (14) eingespannt ist, an denen Verbinder (31, 32, 33) für die Zufuhr und die Abfuhr des Hauptflusses von fermentierter Flüssigkeit und für die Abfuhr von wiedergewonnenem Permeat vorgesehen sind.

5. Filteranordnung nach Anspruch 1 oder 2, **dadurch gekennzeichnet, dass** die Poren in der Filterschicht wenigstens in der Praxis eine Größe von maximal ungefähr 2 Mikrometer haben.

6. Filteranordnung nach Anspruch 5, **dadurch gekennzeichnet, dass** die Poren in der Filterschicht eine Größe haben, die kleiner als 0,5 Mikrometer ist, insbesondere zwischen 0,25 Mikrometer und 0,5 Mikrometer.

7. Filteranordnung nach einem oder mehreren der vorhergehenden Ansprüche, **dadurch gekennzeichnet, dass** der erste Teil der Filterkammer eine quer zu der Filterfläche gerichtete Höhe zwischen 200 Mikrometer und 2000 Mikrometer hat.

8. Filteranordnung nach einem oder mehreren der vorhergehenden Ansprüche, **dadurch gekennzeichnet, dass** die Filterschicht eine Dicke hat, die kleiner als der durchschnittliche Porendurchmesser ist.

9. Filteranordnung nach einem oder mehreren der vorhergehenden Ansprüche, **dadurch gekennzeichnet, dass** die Filterschicht wenigstens auf einer Seite, die dem ersten Teil der Filterkammer zugewandt ist, eine wenigstens in der Praxis ebene Oberfläche mit Höhenvariationen hat, die kleiner als ungefähr 100 Nanometer sind.

10. Filteranordnung nach einem oder mehreren der vorhergehenden Ansprüche, **dadurch gekennzeichnet, dass** das zweite Teil der Filterkammer einen Einlass (24) zur Zuführung einer sauberen Flüssigkeit hat, die von dem Permeatauslass getrennt sein kann oder nicht.

11. Filteranordnung nach Anspruch 10, **dadurch gekennzeichnet, dass** der Einlass getrennt von dem Permeatauslass angeordnet ist.

12. Filteranordnung nach einem oder mehreren der vorhergehenden Ansprüche, **dadurch gekennzeichnet, dass** die Filterschicht eine Siliziumnitridschicht (2) aufweist, in der die Poren angeordnet sind, und die auf einem Substrat (1) aus Silizium angeordnet ist, in dem lokal Öffnungen auf einer Seite vorgesehen ist, die von der Siliziumnitridschicht entfernt ist, um die Siliziumnitridschicht von dieser Seite freizulegen.

13. Filteranordnung nach Anspruch 12, **dadurch gekennzeichnet, dass** die Poren in der Siliziumnitridschicht im Wesentlichen denselben Durchmesser von maximal ungefähr 2 Mikrometer haben, dass die Siliziumnitridschicht eine Dicke hat, die höchstens gleich dem Porendurchmesser der Poren ist, und dass das Substrat eine Dicke in der Größenordnung von mehreren hundert Mikrometern hat.

14. Filteranordnung nach einem oder mehreren der vorhergehenden Ansprüche, **dadurch gekennzeichnet, dass** die Poren in der Filterschicht über eine Anzahl von getrennten Segmenten (81-84) angeordnet sind, wobei benachbarte Segmente voneinander durch geschlossene Zonen (9) getrennt sind.

15. Filteranordnung nach Anspruch 14, **dadurch gekennzeichnet, dass** die Poren in im Wesentlichen rechteckförmige Segmente getrennt sind, die voneinander durch geschlossene Bänder getrennt sind.

## Revendications

1. Dispositif pour filtrer de la bière, comprenant au moins une chambre de filtration ayant une première partie (51) qui communique avec une alimentation (21) et avec une évacuation (22) pour un flux principal de liquide fermenté, et ayant une seconde partie (52) qui communique avec une évacuation (23) pour un perméat récupéré à partir dudit liquide fermenté, dans lequel les deux parties de ladite chambre de filtration sont mutuellement séparées par un filtre (1, 2),
**caractérisé en ce que** ledit filtre comprend une couche de filtre (2) avec des pores (7) d'une taille précisément déterminée, qui sont formés à l'aide de techniques photo-lithographiques, **en ce que** le filtre, après que les pores ont été formés dans celui-ci, est collé ou agencé d'une autre manière sur un support plat (11) avec une épaisseur significativement supérieur à l'épaisseur du filtre, **en ce qu'**au moins une ouverture est ménagée dans le support à la position du filtre afin de révéler la couche de filtre, et **en ce que** ledit support présente un coefficient de dilatation thermique qui est pratiquement égal à celui dudit filtre.

2. Dispositif selon la revendication 1, **caractérisé en ce que** ledit support comprend un matériau céramique.

3. Dispositif selon la revendication 1 ou 2, **caractérisé en ce que** ledit ensemble comprend un empilement d'au moins deux filtres qui sont mutuellement séparés par des joints (12, 13), **en ce que** les filtres sont déployés par paire avec leurs couches de filtre se faisant face, et **en ce que** lesdits joints comprennent des ouvertures qui communiquent avec ladite alimentation et avec ladite évacuation pour ledit flux principal de liquide fermenté ou avec ladite évacuation pour ledit perméat.

4. Dispositif selon la revendication 3, **caractérisé en ce que** l'empilement repose pincé entre deux pièces terminales (14) sur lesquelles sont prévus des connecteurs (31, 32, 33) pour l'alimentation et pour l'évacuation du flux principal de liquide fermenté et pour l'évacuation du perméat récupéré.

5. Dispositif selon la revendication 1 ou 2, **caractérisé en ce que** les pores dans la couche de filtre sont de taille au moins pratiquement égale avec un maximum d'environ 2 µm.

6. Dispositif selon la revendication 5, **caractérisé en ce que** les pores dans la couche de filtre ont une taille plus petite que 0,5 µm, en particulier entre 0,25 µm et 0,5 µm.

7. Dispositif selon l'une ou plusieurs des revendications précédentes, **caractérisé en ce que** la première partie de la chambre de filtration a une hauteur, dirigée transversalement à la surface du filtre, entre 200 µm et 2000 µm.

8. Dispositif selon l'une ou plusieurs des revendications précédentes, **caractérisé en ce que** la couche de filtre a une épaisseur qui est plus petite que le diamètre moyen des pores.

9. Dispositif selon l'une ou plusieurs des revendications précédentes, **caractérisé en ce que** la couche de filtre a, au moins sur son côté dirigé vers la première partie de la chambre, une surface au moins pratiquement plane avec des variations en hauteur plus petites qu'environ 100 nm.

10. Dispositif selon l'une ou plusieurs des revendications précédentes, **caractérisé en ce que** la seconde partie de la chambre de filtration a une entrée (24) pour alimenter un liquide propre, qui peut ou non être séparée de l'évacuation du perméat.

11. Dispositif selon la revendication 10, **caractérisé en ce que** ladite entrée est agencée séparément de l'évacuation du perméat.

12. Dispositif selon l'une ou plusieurs des revendications précédentes, **caractérisé en ce que** la couche de filtre comprend une couche de nitrure de silicium (2) dans laquelle sont ménagés les pores, et qui est placée sur un substrat (1) en silicium dans lequel des ouvertures sont prévues localement, depuis un côté éloigné de la couche de nitrure de silicium, afin de révéler la couche de nitrure de silicium depuis ce côté.

13. Dispositif selon la revendication 12, **caractérisé en ce que** les pores dans la couche de nitrure de silicium ont sensiblement le même diamètre avec un maximum d'environ 2 µm, **en ce que** la couche de nitrure de silicium a une épaisseur qui est au plus égale au diamètre des pores, et **en ce que** le substrat a une épaisseur de l'ordre de plusieurs centaines de micromètres.

14. Dispositif selon l'une ou plusieurs des revendications précédentes, **caractérisé en ce que** les pores sont agencés dans la couche de filtre distribués sur un certain nombre de segments séparés (81-84), dans lesquels des segments adjacents sont mutuellement séparés par des zones fermées (9).

15. Dispositif selon la revendication 14, **caractérisé en ce que** les pores sont divisés dans des segments sensiblement rectangulaires qui sont mutuellement séparés par des bandes fermées.
